# EUROPEAN PATENT SPECIFICATION

(11) **EP 3 593 106 B1**
(45) Date of publication and mention of the grant of the patent: **20.08.2025**
(21) Application number: 18764438.0
(22) Date of filing: 08.03.2018
(51) Int. Cl.: G01L 19/06, G01L 13/02

(54) **PRESSURE SENSOR WITH FLOW PORTING HAVING INTEGRAL FLAME-PROOF SAFETY MECHANISM**
DRUCKSENSOR MIT FLUSSPORTIERUNG MIT INTEGRIERTEM FLAMMSCHUTZMECHANISMUS
CAPTEUR DE PRESSION À ORIFICE D'ÉCOULEMENT AYANT UN MÉCANISME DE SÉCURITÉ INTÉGRÉ RÉSISTANT À LA FLAMME

(30) Priority: 10.03.2017 US 201762470080 P; 23.06.2017 US 201715632059
(43) Date of publication of application: 15.01.2020
(73) Proprietor: Honeywell International Inc., Morris Plains, NJ 07950 (US)
(72) Inventor: HERSHEY, George, Morris Plains, NJ 07950 (US); DAUGERT, Richard D., Morris Plains, NJ 07950 (US); BESELT, Ronald E., Morris Plains, New Jersey 07950 (US)
(74) Representative: Houghton, Mark Phillip
(86) International application number: PCT/US2018/021463
(87) International publication number: WO 2018/165371

(56) References cited:
- EP-B1- 0 636 243
- WO-A1-2014/051679
- WO-A2-2012/047998
- US-A- 4 539 850
- US-A1- 2009 314 093
- US-A1- 2014 209 220
- US-B1- 6 662 662
- US-B2- 8 919 203

## Description

### CROSS-REFERENCE TO RELATED APPLICATIONS AND PRIORITY CLAIM

This application claims priority under 35 U.S.C. § 119(e) to the following U.S. provisional patent applications:
- U.S. Provisional Patent Application No. 62/469,716 filed on March 10, 2017;
- U.S. Provisional Patent Application No. 62/469,954 filed on March 10, 2017;
- U.S. Provisional Patent Application No. 62/470,080 filed on March 10, 2017; and
- U.S. Provisional Patent Application No. 62/470,089 filed on March 10, 2017.

### TECHNICAL FIELD

This disclosure generally relates to pressure sensors. More specifically, this disclosure relates to a pressure sensor with flow porting having an integral flame-proof safety mechanism.

### BACKGROUND

Pressure transmitters are routinely used in industrial processes and other systems to capture pressure measurements. For Health, Safety, and Environmental (HS&E) purposes, it is often a requirement that a pressure transmitter meter body be flame-proof (also known as explosion-proof or "Ex d"). An energized device such as a pressure transmitter meter body is considered to be flame-proof when the device can both (i) contain the pressure generated by an explosive gas mixture being ignited within the device itself and (ii) prevent an explosion flame front from escaping the device. The ability to contain the pressure generated by an explosion and the ability to prevent the flame front from leaving the device help to ensure that no explosive gas mixture outside the device would be ignited. This can be particularly important in industrial processes or other systems where an explosive gas mixture may exist in the ambient environment surrounding the device, such as in an oil and gas refinery.

Pressure containment can normally be achieved by the construction of pressure transmitter meter bodies themselves, which are designed to contain pressure as part of their normal operation in measuring pressure. One conventional technique for containing flame fronts is to attenuate the thermal energy in a flame prior to the flame front being able to leave the device, thereby extinguishing the flame and preventing any external explosive gas mixtures from igniting. For example, some conventional pressure sensors utilize special add-on components called "flame arresters" to contain flame fronts. However, the flame arresters occupy valuable space within a pressure sensor and often require machining of special features to hold the flame arrestors, which increases manufacturing and assembly costs. US 8 919 203 B2 relates to a thermal protection element which is arranged on the front side for the protection of a membrane of a pressure sensor that is subjected to pressure. US 2009/314093 A1 relates to a field device and method of manufacturing a field device including a capillary tube having a non-cylindrical lumen. EP 0 636 243 B1 relates to modular pressure transmitters with flame arresting or quenching headers coupled to process pressure lines.

### SUMMARY

This disclosure provides a pressure sensor with flow porting having an integral flame-proof safety mechanism.

In a first embodiment, an apparatus includes a sensor body and a sensor configured to measure pressure according to claim 1.

In a second embodiment, a system includes a manifold and a pressure sensor mounted to the manifold according to claim 8.

In a third embodiment, a method according to claim 9 includes providing at least one input pressure to a sensor from at least one pressure input in or on a sensor body.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIGURE 1 illustrates an example industrial process control and automation system according to this disclosure;
FIGURE 2 illustrates an example pressure sensor according to this disclosure;
FIGURE 3 illustrates example operation of a pressure sensor according to this disclosure;
FIGURE 4 illustrates example flow porting with an integral flame-proof safety mechanism in a pressure sensor according to this disclosure;
FIGURE 5 illustrates an example use of a pressure sensor according to this disclosure; and
FIGURE 6 illustrates an example method for pressure sensing using a pressure sensor having flow porting with integral flame-proof safety according to this disclosure.

### DETAILED DESCRIPTION

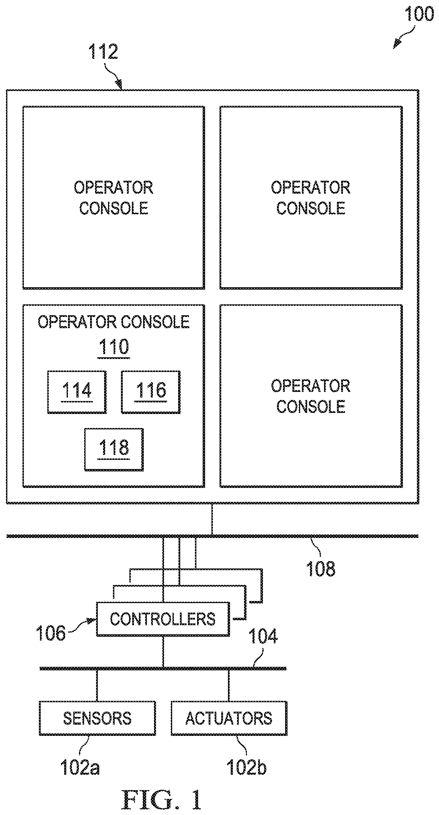

FIGURES 1 through 6, discussed below, and the various embodiments describe the principles of the present invention.

FIGURE 1 illustrates an example industrial process control and automation system 100 according to this disclosure. As shown in FIGURE 1, the system 100 includes various components that facilitate production or processing of at least one product or other material. For instance, the system 100 can be used to facilitate control over components in one or multiple industrial plants. Each plant represents one or more processing facilities (or one or more portions thereof), such as one or more manufacturing facilities for producing at least one product or other material. In general, each plant may implement one or more industrial processes and can individually or collectively be referred to as a process system. A process system generally represents any system or portion thereof configured to process one or more products or other materials in some manner.

In FIGURE 1, the system 100 includes one or more sensors 102a and one or more actuators 102b. The sensors 102a and actuators 102b represent components in a process system that may perform any of a wide variety of functions. For example, the sensors 102a could measure a wide variety of characteristics in the process system, such as pressure, temperature, or flow rate. Also, the actuators 102b could alter a wide variety of characteristics in the process system. Each of the sensors 102a includes any suitable structure for measuring one or more characteristics in a process system. Each of the actuators 102b includes any suitable structure for operating on or affecting one or more conditions in a process system.

At least one network 104 is coupled to the sensors 102a and actuators 102b. The network 104 facilitates interaction with the sensors 102a and actuators 102b. For example, the network 104 could transport measurement data from the sensors 102a and provide control signals to the actuators 102b. The network 104 could represent any suitable network or combination of networks. As particular examples, the network 104 could represent at least one Ethernet network, electrical signal network (such as a HART or FOUNDATION FIELDBUS network), pneumatic control signal network, or any other or additional type(s) of network(s).

The system 100 also includes various controllers 106. The controllers 106 can be used in the system 100 to perform various functions in order to control one or more industrial processes. For example, a first set of controllers 106 may use measurements from one or more sensors 102a to control the operation of one or more actuators 102b. A second set of controllers 106 could be used to optimize the control logic or other operations performed by the first set of controllers. A third set of controllers 106 could be used to perform additional functions.

Controllers 106 are often arranged hierarchically in a system. For example, different controllers 106 could be used to control individual actuators, collections of actuators forming machines, collections of machines forming units, collections of units forming plants, and collections of plants forming an enterprise. A particular example of a hierarchical arrangement of controllers 106 is defined as the "Purdue" model of process control. The controllers 106 in different hierarchical levels can communicate via one or more networks 108 and associated switches, firewalls, and other components.

Each controller 106 includes any suitable structure for controlling one or more aspects of an industrial process. At least some of the controllers 106 could, for example, represent proportional-integral-derivative (PID) controllers or multivariable controllers, such as Robust Multivariable Predictive Control Technology (RMPCT) controllers or other types of controllers implementing model predictive control or other advanced predictive control. As a particular example, each controller 106 could represent a computing device running a real-time operating system, a WINDOWS operating system, or other operating system.

Operator access to and interaction with the controllers 106 and other components of the system 100 can occur via various operator consoles 110. Each operator console 110 could be used to provide information to an operator and receive information from an operator. For example, each operator console 110 could provide information identifying a current state of an industrial process to the operator, such as values of various process variables and warnings, alarms, or other states associated with the industrial process. Each operator console 110 could also receive information affecting how the industrial process is controlled, such as by receiving setpoints or control modes for process variables controlled by the controllers 106 or other information that alters or affects how the controllers 106 control the industrial process.

Multiple operator consoles 110 can be grouped together and used in one or more control rooms 112. Each control room 112 could include any number of operator consoles 110 in any suitable arrangement. In some embodiments, multiple control rooms 112 can be used to control an industrial plant, such as when each control room 112 contains operator consoles 110 used to manage a discrete part of the industrial plant.

Each operator console 110 includes any suitable structure for displaying information to and interacting with an operator. For example, each operator console 110 could include one or more processing devices 114, such as one or more processors, microprocessors, microcontrollers, field programmable gate arrays, application specific integrated circuits, discrete logic devices, or other processing or control devices. Each operator console 110 could also include one or more memories 116 storing instructions and data used, generated, or collected by the processing device(s) 114. Each operator console 110 could further include one or more network interfaces 118 that facilitate communication over at least one wired or wireless network, such as one or more Ethernet interfaces or wireless transceivers.

At least one of the sensors 102a in FIGURE 1 could represent a pressure sensor. As noted above, a pressure sensor often needs to be flame-proof (explosion-proof or "Ex d"). In accordance with this disclosure, a pressure sensor meter body incorporates a number of unique internal flow paths that are used to transfer process pressure to a sensor, and these flow paths are also designed to comply with suitable flame-proof requirements. For example, a potential explosion within the meter body could be caused by an explosive gas mixture reaching an electronic sensor and igniting. The design of the pressure sensor meter body can help to ensure that the pressure generated by an explosion within the pressure sensor is contained within the pressure sensor. Also, the unique flow paths in the pressure sensor meter body help to ensure that a flame, front is extinguished by absorbing the thermal energy in a flame before the flame is able to exit the meter body (either to an industrial process or to the outside ambient environment).

Among other things, the pressure sensor utilizes a unique meter body construction that has thick walls relative to the internal volume that an explosive gas mixture can encompass. Also, the meter body includes flow paths that are circuitous or helical in nature or include sharp turns and that have relatively small cross-sections relative to their lengths. These design features enable cost-effective and highly accurate performance of the pressure sensor while also supporting an integral flame-proof safety mechanism within the pressure sensor. Thus, the pressure sensor can inherently satisfy flame-proof requirements based on its design and avoid the need for special features like flame arrestors that can occupy space and increase manufacturing and assembly costs.

Additional details regarding a pressure sensor with flow porting having an integral flame-proof safety mechanism are provided below. Note that these details relate to specific implementations of the pressure sensor and that other implementations could vary as needed or desired.

Although FIGURE 1 illustrates one example of an industrial process control and automation system 100, various changes may be made to FIGURE 1. For example, industrial control and automation systems come in a wide variety of configurations. The system 100 shown in FIGURE 1 is meant to illustrate one example operational environment in which a pressure sensor could be used.

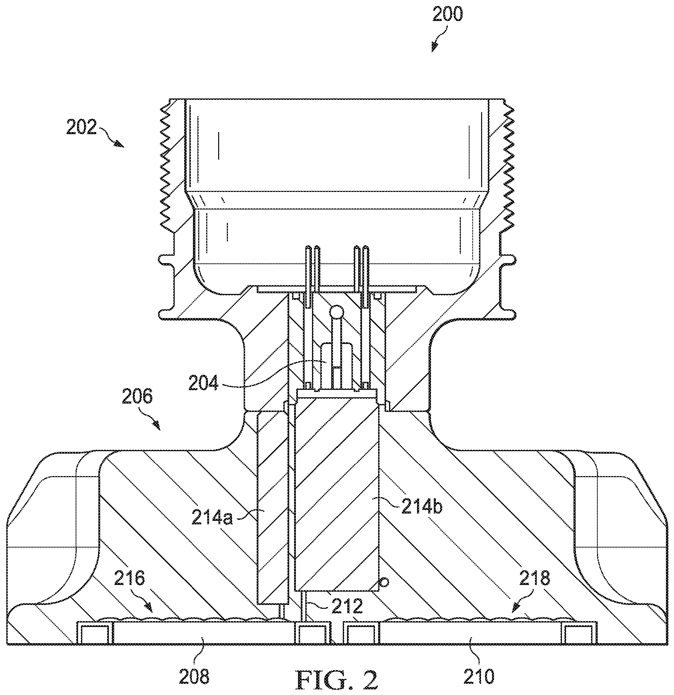

FIGURE 2 illustrates an example pressure sensor 200 according to this disclosure. For ease of explanation, the pressure sensor 200 may be described as being used in the industrial process control and automation system 100 of FIGURE 1. However, the pressure sensor 200 could be used in any other suitable system, and the system need not relate to industrial process control and automation.

As shown in FIGURE 2, the pressure sensor 200 includes an adapter 202 and at least one sensor 204. The adapter 202 denotes a portion of the pressure sensor 200 in which wires or other signal conductors can be connected to the sensor 204. The outer surface of the adapter 202 can also be threaded or otherwise configured to facilitate attachment of the pressure sensor 200 to a larger device or system. The adapter 202 could be formed from any suitable material(s) and in any suitable manner. As a particular example, the adapter 202 could be formed from metal.

The sensor 204 denotes a structure that senses one or more input pressures and that outputs at least one signal based on the input pressure(s). For example, the sensor 204 could output an electrical signal whose voltage or current varies proportionally with a single pressure or with a differential pressure. The sensor 204 includes any suitable pressure sensor, such as a piezo-resistive or capacitive sensor. Multiple sensors 204 could also be used, such as sensors that output both differential and static pressure measurements. Also, the multiple sensors 204 may or may not be implemented on a single integrated circuit chip. Each sensor 204 includes any suitable structure for measuring pressure.

The pressure sensor 200 also includes a coplanar body 206, which denotes a portion of the pressure sensor 200 in which multiple pressure inputs are located. The pressure inputs are generally located on a common plane, which is why the body 206 is referred to as a "coplanar" body. The coplanar body 206 could be formed from any suitable material(s) and in any suitable manner. As a particular example, the coplanar body 206 could be formed from metal. Note that the adapter 202 and the coplanar body 206 could be formed integrally or as separate pieces that are connected together, such as by welding.

The pressure inputs in the pressure sensor 200 are implemented using a high-pressure barrier diaphragm 208 and a low-pressure barrier diaphragm 210. Each of the barrier diaphragms 208 and 210 represents a barrier that allows pressure to be transmitted into the pressure sensor 200 while preventing process fluid (such as oil, gas, or other high pressure and corrosive fluid) from entering into the pressure sensor 200. The barrier diaphragms 208 and 210 represent flexible membranes that can move up or down in FIGURE 2 based on the amount of pressure applied to the barrier diaphragms 208 and 210.

Each of the barrier diaphragms 208 and 210 denotes any suitable flexible membrane, such as a metallic membrane. Each of the barrier diaphragms 208 and 210 could also have any suitable size, shape, and dimensions. In particular embodiments, the barrier diaphragms 208 and 210 are small enough and spaced apart to fit within the established bolt pattern for industry-standard DIN manifolds. This allows the pressure sensor 200 to be mounted directly to a manifold.

Pressures from the barrier diaphragms 208 and 210 are transmitted to the sensor 204 via a fill fluid that travels through various passages 212. The fill fluid could denote an incompressible fluid, so pressure applied by the barrier diaphragm 208 or 210 is conveyed by the fill fluid to the sensor 204. The fill fluid denotes any suitable fluid for conveying pressure, such as silicone oil or other suitable fluid. Each passage 212 denotes any suitable passageway for fill fluid.

The pressure sensor 200 may optionally contain fluid expansion compensation elements 214a-214b, which are used to reduce the thermal expansion effect of the fill fluid. In some embodiments, it may be necessary or desirable to reduce or minimize the fluid travel of the fill fluid through the passages 212. However, this may be complicated by the need to operate the pressure sensor 200 over a large temperature range. Since the fluid expansion properties of the fill fluid may greatly exceed those of the body 206, this results in a larger volume of fluid as the temperature increases. To help handle this issue, the fluid expansion compensation elements 214a-214b can be used and denote cylindrical or other components that encircle or surround various ones of the passages 212. The fluid expansion compensation elements 214a-214b can be formed using a low thermal expansion material, such as INVAR (FeNi36 or 64FeNi) or other material with low thermal expansion as compared to the material of the coplanar body 206.

Each barrier diaphragm 208 and 210 has an associated overload or overpressure protection mechanism 216 and 218, respectively. The protection mechanisms 216 and 218 generally provide protection against overpressure conditions that can damage the pressure sensor 200. Here, the protection mechanisms 216 and 218 implement separate protection for the sensor 204. Each of the protection mechanisms 216 and 218 includes any suitable structure for providing structural reinforcement and overpressure protection. Each of the protection mechanisms 216 and 218 could, for instance, denote an overload diaphragm that can move, where the associated barrier diaphragm 208 or 210 can nest against the protection mechanism 216 or 218 to prevent further movement of the barrier diaphragm 208 or 210.

As described in more detail below, the pressure sensor 200 includes unique flow paths (such as the passages 212) that are used by the fill fluid to transfer process pressure to the sensor 204. These flow paths also allow the pressure sensor 200 to comply with suitable flame-proof requirements.

Although FIGURE 2 illustrates one example of a pressure sensor 200, various changes may be made to FIGURE 2. For example, the sizes, shapes, and relative dimensions of the components in FIGURE 2 are for illustration only. Also, other arrangements of the components in FIGURE 2 could be used in a pressure sensor. In addition, the overall form factor for the pressure sensor 200 could vary as needed or desired, and the features used to comply with flame-proof requirements described in this patent document could be used in other pressure sensors (including non-differential pressure sensors).

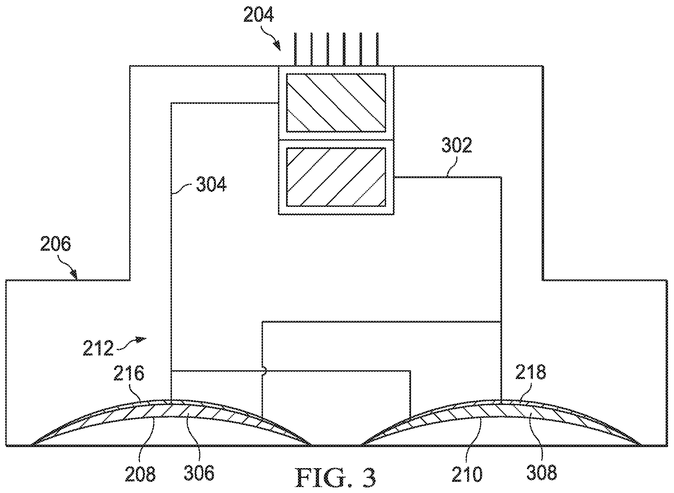

FIGURE 3 illustrates example operation of a pressure sensor according to this disclosure. For ease of explanation, the operations shown in FIGURE 3 are described with respect to the differential pressure sensor 200 of FIGURE 2. However, these operations could occur using any other suitable pressure sensor.

As shown in FIGURE 3, internal porting is implemented in the body 206 using the passages 212 to transfer two pressure inputs to the sensor 204. A high-pressure port 302 provides a higher-pressure input to the sensor 204, and a low-pressure port 304 provides a lower-pressure input to the sensor 204.

A fill fluid 306 fills a gap between the barrier diaphragm 208 and the protection mechanism (overload diaphragm) 216. The fill fluid 306 is ported via the port 302 to both the high-pressure side of the sensor 204 and to a gap between the body 206 and the other protection mechanism (overload diaphragm) 218. Similarly, a fill fluid 308 fills the gap between the barrier diaphragm 210 and the protection mechanism (overload diaphragm) 218. The fill fluid 308 is ported via the port 304 to both the low-pressure side of the sensor 204 and to a gap between the body 206 and the other protection mechanism (overload diaphragm) 216.

During the application of high-side pressure, the pressure is transmitted from the barrier diaphragm 208 to the fill fluid 306 and then to the sensor 204 and to the gap between the other protection mechanism (overload diaphragm) 218 and the body 206. This causes the protection mechanism 218 to deflect away from the body 206, increasing the gap between the body 206 and the protection mechanism 218. Meanwhile, the gap between the barrier diaphragm 208 and the protection mechanism 216 is reduced. When sufficient fill fluid 306 has moved to eliminate the gap between the barrier diaphragm 208 and the protection mechanism 216, the barrier diaphragm 208 and the protection mechanism 216 nest together, and no additional pressure will be transmitted to the sensor 204, thus providing overpressure protection for the sensor 204.

In a similar manner, during the application of low-side pressure, the pressure is transmitted from the barrier diaphragm 210 to the fill fluid 308 and then to the sensor 204 and to the gap between the other protection mechanism (overload diaphragm) 216 and the body 206. This causes the protection mechanism 216 to deflect away from the body 206, increasing the gap between the body 206 and the protection mechanism 216. Meanwhile, the gap between the barrier diaphragm 210 and the protection mechanism 218 is reduced. When sufficient fill fluid 308 has moved to eliminate the gap between the barrier diaphragm 210 and the protection mechanism 218, the barrier diaphragm 210 and the protection mechanism 218 nest together, and no additional pressure will be transmitted to the sensor 204, thus providing overpressure protection for the sensor 204.

Although FIGURE 3 illustrates one example of operation of a differential pressure sensor with overpressure protection, various changes may be made to FIGURE 3. For example, the sizes, shapes, and relative dimensions of the components in FIGURE 3 are for illustration only.

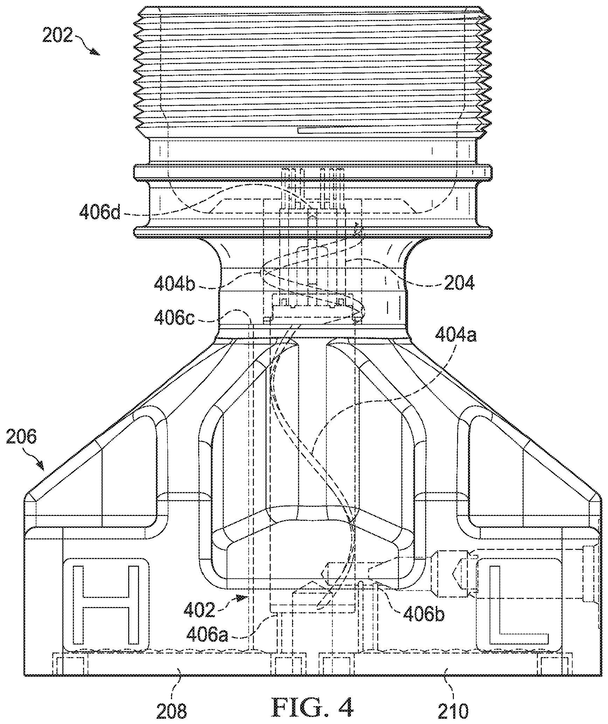

FIGURE 4 illustrates a flow porting with an integral flame-proof safety mechanism in a pressure sensor 200 according to the claimed invention. For ease of explanation, the flow porting shown in FIGURE 4 is described with respect to the pressure sensor 200 of FIGURE 2. However, the flow porting could be used with any other suitable pressure sensor.

In some embodiments, to help increase or maximize the accuracy of the pressure sensor 200, the volume of the fill fluid used in the body 206 can be minimized. As a result, internal flow paths (the passages 212 implementing the pressure ports 302 and 304) in the pressure sensor 200 have relatively small diameters and may contain a number of bends and curves.

As shown in FIGURE 4, the body 206 includes a number of narrow passages for the fill fluid, at least some of which are curved or include bends. The passages include one or more passages 402 that are generally straight but that are long and narrow, so these passages 402 have relatively small cross-sections relative to their lengths. The passages also include narrow helical passages 404a-404b, where the curved or helical passage 404a is longer than the curved or helical passage 404b. The helical passages 404a-404b may be curved along substantially their entire lengths, and again the helical passages 404a-404b have relatively small cross-sections relative to their lengths. In addition, some of the passages include a number of sharp bends 406a-406d, such as 90° turns.

Long and narrow passages with turns or bends are well-suited for arresting flames. This is because of (i) the large surface area relative to the volumetric flow path in a narrow and long passage and (ii) the turbulence generated in curved passages and 90° turns. These features are very effective at absorbing thermal energy in a flame front and extinguishing a flame.

Thus, flame arresting can be accomplished in the pressure sensor 200 using the long and narrow flow paths (at least some with curved passages and 90° turns) that serve "double duty," minimizing internal fill fluid volume and providing flame-proof functionality. The pressure sensor 200 can therefore inherently comply with flame-proof requirements without the need for incorporating flame arrestors or other components that add cost and increase the overall package size of the body 206.

Although FIGURE 4 illustrates a flow porting with an integral flame-proof safety mechanism in a pressure sensor, various changes may be made to FIGURE 4. For example, the sizes, shapes, and relative dimensions of the components in FIGURE 4 are for illustration only.

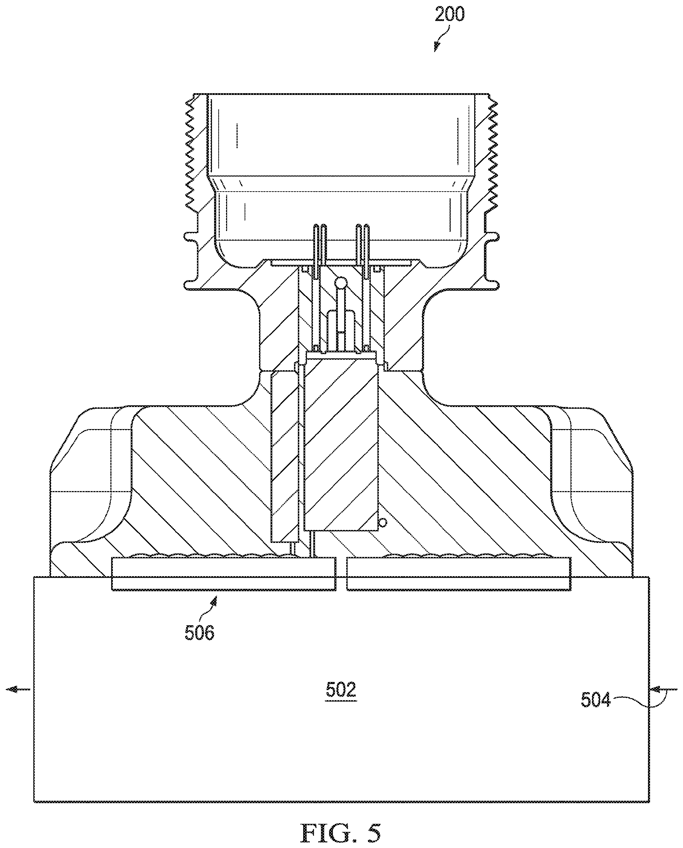

FIGURE 5 illustrates an example use of a pressure sensor according to this disclosure. For ease of explanation, the use shown in FIGURE 5 is described with respect to the pressure sensor 200 of FIGURE 2. However, the pressure sensor 200 could be used in any other suitable manner.

As shown in FIGURE 5, the pressure sensor 200 is mounted directly to a manifold 502. The manifold 502 denotes any suitable structure that is configured to transport at least one process fluid 504. As noted above, the manifold 502 could be configured to transport one or more corrosive process fluids at high pressures. The manifold 502 could have any suitable size, shape, and dimensions and could be formed from any suitable material(s).

The pressure sensor 200 can be mounted directly to openings 506 of the manifold 502. The openings 506 could have any suitable size, shape, and dimensions and could be separated by any suitable distance. As noted above, for example, the manifold 502 could denote an industry-standard DIN manifold, and the barrier diaphragms 208 and 210 can be small enough and spaced apart to fit within the established bolt pattern for the DIN manifold.

Although FIGURE 5 illustrates one example use of a pressure sensor 200, various changes may be made to FIGURE 5. For example, the pressure sensor 200 could be used in any other suitable manner and need not be used with a manifold.

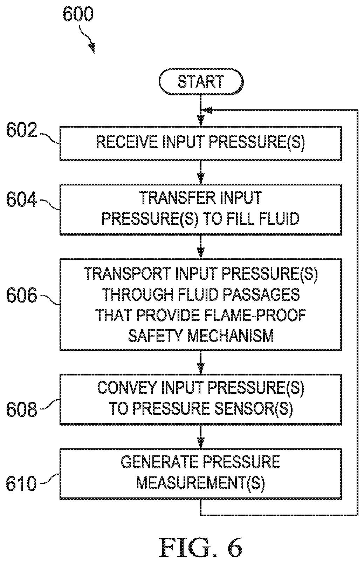

FIGURE 6 illustrates an example method 600 for pressure sensing using a pressure sensor having flow porting with integral flame-proof safety according to this disclosure. For ease of explanation, the method 600 shown in FIGURE 6 is described with respect to the pressure sensor 200 of FIGURE 2 having the internal flow porting as shown in FIGURE 4. However, the method 600 could be used with any other suitable pressure sensor.

As shown in FIGURE 6, one or more input pressures are received at step 602. This could include, for example, receiving input pressures at the barrier diaphragms 208 and 210 of the pressure sensor 200. As a particular example, this could include receiving input pressures at the barrier diaphragms 208 and 210 of the pressure sensor 200 through openings 506 of the manifold 502. The one or more input pressures are transferred to fill fluid at step 604. This could include, for example, the barrier diaphragms 208 and 210 transferring the input pressures to incompressible fill fluid 306 and 308.

The one or more input pressures are transported through various fluid passages at step 606. This could include, for example, the fill fluid 306 and 308 transporting the input pressures through the pressure ports 302 and 304, which include the passages 402, 404 and the passages with the bends 406a-406d. At least some of the fluid passages extend between the barrier diaphragms 208 and 210 and the sensor(s) 204, and some of the fluid passages could extend between the barrier diaphragms 208 and 210 to provide overpressure protection as shown in FIGURE 4. Because of the long and narrow design of the fluid passages, as well as the curved or bent design of at least some of the fluid passages, the fluid passages provide an integral flame-proof safety mechanism in the pressure sensor 200.

The one or more input pressures are conveyed to one or more pressure sensors at step 608, and one or more pressure measurements are generated at step 610. This could include, for example, the at least one sensor 204 receiving the input pressure(s) from the fill fluid 306 and 308. This could also include the at least one sensor 204 generating an electrical signal whose voltage or current varies proportionally with the input pressure(s). This could further include different sensors 204 generating multiple pressure measurements, such as differential and static pressure measurements.

Although FIGURE 6 illustrates one example of a method 600 for pressure sensing using a pressure sensor having flow porting with integral flame-proof safety, various changes may be made to FIGURE 6. For example, while shown as a series of steps, various steps in FIGURE 6 could overlap, occur in parallel, occur in a different order, or occur any number of times.

It may be advantageous to set forth definitions of certain words and phrases used throughout this patent document. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims.

While this disclosure has described certain embodiments and generally associated methods, alterations and permutations of these embodiments and methods will be apparent to those skilled in the art. Other changes, substitutions, and alterations are also possible without departing from the scope of this disclosure, as defined by the following claims.

## Claims

1. An apparatus comprising:
a sensor body (206) including a low-pressure side and a high-pressure side;
a sensor (204) disposed between the low-pressure side and the high-pressure side and configured to measure pressure;
at least one pressure input per each of the low-pressure side and the high-pressure side of the sensor body, in or on the sensor body, the at least one pressure input configured to provide at least one input pressure from at least one of the low-pressure side and the high-pressure side to the sensor; and
multiple fluid passages (212, 302, 304, 402, 404a-404b, 406a-406d) configured to convey the at least one input pressure from the at least one pressure input from each of the low-pressure side and the high-pressure side to the sensor using a fill fluid (306, 308);
wherein the fluid passages comprise:
one or more long and narrow straight passages (402);
and
wherein the multiple fluid passages are configured to both (i) transport the fill fluid and (ii) absorb thermal energy in a flame created by the sensor before the flame exits the sensor body;
**characterized in that**:
the fluid passages also include long and narrow helical passages (404a, 404b), wherein one of the helical passages (404a) is longer than a further (404b) of the helical passages.

2. The apparatus of Claim 1, wherein the fluid passages have small cross-sections relative to their lengths.

3. The apparatus of Claim 1, wherein the sensor comprises one of multiple sensors (204).

4. The apparatus of Claim 1, wherein the sensor body is a coplanar meter body (206).

5. The apparatus of Claim 1, wherein the apparatus comprises multiple pressure inputs configured to provide multiple pressures to the sensor.

6. The apparatus of Claim 5, wherein each pressure input comprises:
a barrier diaphragm (208, 210) configured to move in response to pressure; and
an overload diaphragm (216, 218) configured to limit movement of the barrier diaphragm.

7. The apparatus of Claim 6, wherein:
the at least one pressure input comprises first and second pressure inputs; and
the multiple fluid passages comprise:
at least one first passage (212, 302) configured to transport a first fill fluid between (i) a gap between the barrier diaphragm of the first pressure input and the overload diaphragm of the first pressure input and (ii) the sensor and a gap between the overload diaphragm of the second pressure input and the sensor body; and
at least one second passage (212, 304) configured to transport a second fill fluid between (i) a gap between the barrier diaphragm of the second pressure input and the overload diaphragm of the second pressure input and (ii) the sensor and a gap between the overload diaphragm of the first pressure input and the sensor body.

8. A system comprising:
a manifold (502); and
a pressure sensor (200) mounted to the manifold, the pressure sensor comprising the apparatus of any of Claims 1-7.

9. A method comprising:
providing (604-608) input pressure to a sensor (204) disposed within a sensor body between a low-pressure side and a high-pressure side of the sensor body from at least one the low-pressure input and the high-pressure input of the sensor body (206); and
generating (610) a pressure measurement using the sensor based on the input pressure;
wherein providing the input pressure comprises transporting fill fluid (306, 308) through multiple fluid passages (212, 302, 304, 402, 404a-404b, 406a-406d) configured to convey the input pressure from the at least one pressure input associated with each of the low-pressure side and the high-pressure side to the sensor;
wherein the fluid passages comprise:
one or more long and narrow straight passages (402):
and
wherein the multiple fluid passages are configured to both (i) transport the fill fluid and (ii) absorb thermal energy in a flame created by the sensor before the flame exits the sensor body;
**characterized in that**:
the fluid passages also include long and narrow helical passages (404a, 404b), wherein one of the helical passages (404a) is longer than a further (404b) of the helical passages

10. The method of Claim 9, wherein the fluid passages have small cross-sections relative to their lengths.

11. The method of Claim 9, wherein each pressure input comprises:
a barrier diaphragm (208, 210) configured to move in response to pressure; and
an overload diaphragm (216, 218) configured to limit movement of the barrier diaphragm.

12. The method of Claim 11, wherein:
the at least one pressure input comprises first and second pressure inputs; and
the multiple fluid passages comprise:
at least one first passage (212, 302) that transports a first fill fluid between (i) a gap between the barrier diaphragm of the first pressure input and the overload diaphragm of the first pressure input and (ii) the sensor and a gap between the overload diaphragm of the second pressure input and the sensor body; and
at least one second passage (212, 304) that transports a second fill fluid between (i) a gap between the barrier diaphragm of the second pressure input and the overload diaphragm of the second pressure input and (ii) the sensor and a gap between the overload diaphragm of the first pressure input and the sensor body.

## Patentansprüche

1. Einrichtung, umfassend:
einen Sensorkörper (206), der eine Niederdruckseite und eine Hochdruckseite beinhaltet;
einen Sensor (204), der zwischen der Niederdruckseite und der Hochdruckseite angeordnet und dazu konfiguriert ist, Druck zu messen;
mindestens einen Druckeingang für jeweils die Niederdruckseite und die Hochdruckseite des Sensorkörpers, in oder auf dem Sensorkörper, wobei der mindestens eine Druckeingang dazu konfiguriert ist, mindestens einen Eingangsdruck von mindestens einer aus der Niederdruckseite und der Hochdruckseite an den Sensor bereitzustellen; und
mehrere Fluiddurchgänge (212, 302, 304, 402, 404a-404b, 406a-406d), die dazu konfiguriert sind, mindestens einen Eingangsdruck von dem mindestens einen Druckeingang von jeweils der Niederdruckseite und der Hochdruckseite unter Verwendung eines Füllfluids (306, 308) an den Sensor zu übertragen;
wobei die Fluiddurchgänge Folgendes umfassen:
einen oder mehrere lange und schmale gerade Durchgänge (402);
und
wobei die mehreren Fluiddurchgänge dazu konfiguriert sind, sowohl (i) das Füllfluid zu transportieren als auch (ii) Wärmeenergie in einer Flamme zu absorbieren, die von dem Sensor hervorgebracht wird, bevor die Flamme den Sensorkörper verlässt;
**dadurch gekennzeichnet, dass**:
die Fluiddurchgänge auch lange und schmale spiralförmige Durchgänge (404a, 404b) umfassen, wobei einer der spiralförmigen Durchgänge (404a) länger ist als ein weiterer (404b) der spiralförmigen Durchgänge.

2. Einrichtung nach Anspruch 1, wobei die Fluiddurchgänge relativ zu ihrer Länge kleine Querschnitte aufweisen.

3. Einrichtung nach Anspruch 1, wobei der Sensor einen aus mehreren Sensoren (204) umfasst.

4. Einrichtung nach Anspruch 1, wobei der Sensorkörper ein koplanarer Zählerkörper (206) ist.

5. Einrichtung nach Anspruch 1, wobei die Einrichtung mehrere Druckeingänge umfasst, die dazu konfiguriert sind, mehrere Drücke an den Sensor bereitzustellen.

6. Einrichtung nach Anspruch 5, wobei jeder Druckeingang Folgendes umfasst:
eine Barrieremembran (208, 210), die dazu konfiguriert ist, sich als Antwort auf Druck zu bewegen; und
eine Überlastmembran (216, 218), die dazu konfiguriert ist, eine Bewegung der Barrieremembran zu begrenzen.

7. Einrichtung nach Anspruch 6, wobei:
der mindestens eine Druckeingang erste und zweite Druckeingänge umfasst; und
wobei die mehreren Fluiddurchgänge Folgendes umfassen:
mindestens einen ersten Durchgang (212, 302), der dazu konfiguriert ist, ein erstes Füllfluid zwischen (i) einem Spalt zwischen der Barrieremembran des ersten Druckeingangs und der Überlastmembran des ersten Druckeingangs und (ii) dem Sensor und einem Spalt zwischen der Überlastmembran des zweiten Druckeingangs und dem Sensorkörper zu transportieren; und
mindestens einen zweiten Durchgang (212, 304), der dazu konfiguriert ist, ein zweites Füllfluid zwischen (i) einem Spalt zwischen der Barrieremembran des zweiten Druckeingangs und der Überlastmembran des zweiten Druckeingangs und (ii) dem Sensor und einem Spalt zwischen der Überlastmembran des ersten Druckeingangs und dem Sensorkörper zu transportieren.

8. System, umfassend:
eine Sammelleitung (502); und
einen Drucksensor (200), der an der Sammelleitung angebracht ist, wobei der Drucksensor die Einrichtung nach einem der Ansprüche 1 bis 7 umfasst.

9. Verfahren, umfassend:
Bereitstellen (604-608) von Eingangsdruck an einen Sensor (204), der innerhalb eines Sensorkörpers zwischen einer Niederdruckseite und einer Hochdruckseite des Sensorkörpers angeordnet ist, von mindestens einem von dem Niederdruckeingang und dem Hochdruckeingang des Sensorkörpers (206); und
Erzeugen (610) einer Druckmessung unter Verwendung des Sensors auf Basis des Eingangsdrucks;
wobei das Bereitstellen des Eingangsdrucks das Transportieren von Füllfluid (306, 308) durch mehrere Fluiddurchgänge (212, 302, 304, 402, 404a-404b, 406a-406d) umfasst, die dazu konfiguriert sind, den Eingangsdruck von dem mindestens einen Druckeingang, der jeweils der Niederdruckseite und der Hochdruckseite zugehörig ist, an den Sensor zu übertragen;
wobei die Fluiddurchgänge Folgendes umfassen:
einen oder mehrere lange und schmale gerade Durchgänge (402);
und
wobei die mehreren Fluiddurchgänge dazu konfiguriert sind, sowohl (i) das Füllfluid zu transportieren als auch (ii) Wärmeenergie in einer Flamme zu absorbieren, die von dem Sensor hervorgebracht wird, bevor die Flamme den Sensorkörper verlässt;
**dadurch gekennzeichnet, dass**:
die Fluiddurchgänge auch lange und schmale spiralförmige Durchgänge (404a, 404b) umfassen, wobei einer der spiralförmigen Durchgänge (404a) länger ist als ein weiterer (404b) der spiralförmigen Durchgänge.

10. Verfahren nach Anspruch 9, wobei die Fluiddurchgänge relativ zu ihrer Länge kleine Querschnitte aufweisen.

11. Verfahren nach Anspruch 9, wobei jeder Druckeingang Folgendes umfasst:
eine Barrieremembran (208, 210), die dazu konfiguriert ist, sich als Antwort auf Druck zu bewegen; und
eine Überlastmembran (216, 218), die dazu konfiguriert ist, eine Bewegung der Barrieremembran zu begrenzen.

12. Verfahren nach Anspruch 11, wobei:
der mindestens eine Druckeingang erste und zweite Druckeingänge umfasst; und
wobei die mehreren Fluiddurchgänge Folgendes umfassen:
mindestens einen ersten Durchgang (212, 302), der ein erstes Füllfluid zwischen (i) einem Spalt zwischen der Barrieremembran des ersten Druckeingangs und der Überlastmembran des ersten Druckeingangs und (ii) dem Sensor und einem Spalt zwischen der Überlastmembran des zweiten Druckeingangs und dem Sensorkörper transportiert; und
mindestens einen zweiten Durchgang (212, 304), der ein zweites Füllfluid zwischen (i) einem Spalt zwischen der Barrieremembran des zweiten Druckeingangs und der Überlastmembran des zweiten Druckeingangs und (ii) dem Sensor und einem Spalt zwischen der Überlastmembran des ersten Druckeingangs und dem Sensorkörper zu transportieren.

## Revendications

1. Appareil comprenant :
un corps de capteur (206) incluant un côté basse pression et un côté haute pression ;
un capteur (204) disposé entre le côté basse pression et le côté haute pression et configuré pour mesurer la pression ;
au moins une entrée de pression pour chacun du côté basse pression et du côté haute pression du corps de capteur, dans ou sur le corps de capteur, l'au moins une entrée de pression étant configurée pour fournir au moins une pression d'entrée à partir d'au moins l'un du côté basse pression et du côté haute pression vers le capteur ; et
de multiples passages de fluide (212, 302, 304, 402, 404a-404b, 406a-406d) configurés pour acheminer l'au moins une pression d'entrée à partir de l'au moins une entrée de pression de chacun du côté basse pression et du côté haute pression vers le capteur à l'aide d'un fluide de remplissage (306, 308) ;
dans lequel les passages de fluide comprennent :
un ou plusieurs passages droits longs et étroits (402) ;
et
dans lequel les multiples passages de fluide sont configurés pour à la fois (i) transporter le fluide de remplissage et (ii) absorber l'énergie thermique dans une flamme créée par le capteur avant que la flamme ne sorte du corps de capteur ;
**caractérisé en ce que** :
les passages de fluide incluent également des passages hélicoïdaux longs et étroits (404a, 404b), dans lequel l'un des passages hélicoïdaux (404a) est plus long qu'un autre (404b) des passages hélicoïdaux.

2. Appareil selon la revendication 1, dans lequel les passages de fluide ont de petites sections transversales par rapport à leurs longueurs.

3. Appareil selon la revendication 1, dans lequel le capteur comprend un de multiples capteurs (204).

4. Appareil selon la revendication 1, dans lequel le corps de capteur est un corps de dispositif de mesure coplanaire (206).

5. Appareil selon la revendication 1, dans lequel l'appareil comprend de multiples entrées de pression configurées pour fournir de multiples pressions au capteur.

6. Appareil selon la revendication 5, dans lequel chaque entrée de pression comprend :
un diaphragme de barrière (208, 210) configuré pour se déplacer en réponse à la pression ; et
un diaphragme de surcharge (216, 218) configuré pour limiter le mouvement du diaphragme de barrière.

7. Appareil selon la revendication 6, dans lequel :
l'au moins une entrée de pression comprend des première et deuxième entrées de pression ; et
les multiples passages de fluide comprennent :
au moins un premier passage (212, 302) configuré pour transporter un premier fluide de remplissage entre (i) un espace entre le diaphragme de barrière de la première entrée de pression et le diaphragme de surcharge de la première entrée de pression et (ii) le capteur et un espace entre le diaphragme de surcharge de la deuxième entrée de pression et le corps de capteur ; et
au moins un deuxième passage (212, 304) configuré pour transporter un deuxième fluide de remplissage entre (i) un espace entre le diaphragme de barrière de la deuxième entrée de pression et le diaphragme de surcharge de la deuxième entrée de pression et (ii) le capteur et un espace entre le diaphragme de surcharge de la première entrée de pression et le corps de capteur.

8. Système comprenant :
un collecteur (502) ; et
un capteur de pression (200) monté sur le collecteur, le capteur de pression comprenant l'appareil selon l'une quelconque des revendications 1 à 7.

9. Procédé comprenant :
la fourniture (604-608) d'une pression d'entrée à un capteur (204) disposé à l'intérieur d'un corps de capteur entre un côté basse pression et un côté haute pression du corps de capteur à partir d'au moins une de l'entrée basse pression et de l'entrée haute pression du corps de capteur (206) ; et
la génération (610) d'une mesure de pression à l'aide du capteur sur la base de la pression d'entrée ;
dans lequel la fourniture de la pression d'entrée comprend le transport du fluide de remplissage (306, 308) à travers de multiples passages de fluide (212, 302, 304, 402, 404a-404b, 406a-406d) configurés pour acheminer la pression d'entrée à partir de l'au moins une entrée de pression associée à chacun du côté basse pression et du côté haute pression vers le capteur ;
dans lequel les passages de fluide comprennent :
un ou plusieurs passages droits longs et étroits (402) ;
et
dans lequel les multiples passages de fluide sont configurés pour à la fois (i) transporter le fluide de remplissage et (ii) absorber l'énergie thermique dans une flamme créée par le capteur avant que la flamme ne sorte du corps de capteur ;
**caractérisé en ce que** :
les passages de fluide incluent également des passages hélicoïdaux longs et étroits (404a, 404b), dans lequel l'un des passages hélicoïdaux (404a) est plus long qu'un autre (404b) des passages hélicoïdaux.

10. Procédé selon la revendication 9, dans lequel les passages de fluide ont de petites sections transversales par rapport à leurs longueurs.

11. Procédé selon la revendication 9, dans lequel chaque entrée de pression comprend :
un diaphragme de barrière (208, 210) configuré pour se déplacer en réponse à la pression ; et
un diaphragme de surcharge (216, 218) configuré pour limiter le mouvement du diaphragme de barrière.

12. Procédé selon la revendication 11, dans lequel :
l'au moins une entrée de pression comprend des première et deuxième entrées de pression ; et
les multiples passages de fluide comprennent :
au moins un premier passage (212, 302) qui transporte un premier fluide de remplissage entre (i) un espace entre le diaphragme de barrière de la première entrée de pression et le diaphragme de surcharge de la première entrée de pression et (ii) le capteur et un espace entre le diaphragme de surcharge de la deuxième entrée de pression et le corps de capteur ; et
au moins un deuxième passage (212, 304) qui transporte un deuxième fluide de remplissage entre (i) un espace entre le diaphragme de barrière de la deuxième entrée de pression et le diaphragme de surcharge de la deuxième entrée de pression et (ii) le capteur et un espace entre le diaphragme de surcharge de la première entrée de pression et le corps de capteur.
